## Europäisches Patentamt
## European Patent Office
## Office européen des brevets

(11) Publication number: **0 112 091**
A1

# EUROPEAN PATENT APPLICATION

(21) Application number: 83307287.9

(22) Date of filing: 30.11.83

(51) Int. Cl.³: **B 65 G 69/16**
**A 01 D 17/10**

(30) Priority: 01.12.82 GB 8234192

(43) Date of publication of application:
27.06.84 Bulletin 84/26

(84) Designated Contracting States:
BE DE FR GB IT LU NL SE

(71) Applicant: Consort Machinery Limited
50 High Street Soham
Ely Cambridgeshire(GB)

(72) Inventor: Green, John Curtis
Quanea
Ely Cambridgeshire(GB)

(74) Representative: Nash, Keith Wilfrid et al,
KEITH W. NASH & Co. Pearl Assurance House 90-92
Regent Street
Cambridge CB2 1DP(GB)

(54) Improved luffing head for produce delivery.

(57) A method is described for controlling the delivery of produce from the luffing head of a produce delivery conveyor in which the declination of the luffing head is adjustable and is sensed so that when it is more than a predetermined angle (at which produce will roll down the conveyor) a subsidiary is moved into an operating position above the luffing head, the subsidiary conveyor moving in synchronism with the delivery conveyor and carrying hinged flights, the run of the subsidiary conveyor being such that the flights hang down therefrom and co-operate with the upper surface of the main conveyor to prevent roll-off of the produce and control the delivery of the produce therefrom.

Apparatus for performing this method is described in which the flights on the subsidiary conveyor are hinged thereto and may be of rubber or plastics material.

Fig. I

Description                                               C187C

Title: Improved luffing head for produce delivery

Field of invention

This invention concerns produce delivery conveyors for delivering vegetables and the like to containers and in particular to an improved luffing head for such conveyors.

Background to the invention

Where vegetables are being delivered to a produce vehicle for example, the luffing head of the delivery conveyor has, at least initially to be steeply declined into the vehicle so that the feed-off end is close to the vehicle floor, to minimise drop. The reduction of drop is limited by the presence and height of flights fitted to the conveyor to prevent roll-back.

If the angle of elevation can be lowered the need for flights is reduced although when the main conveyor is declined steeply as at the beginning of a loading phase, so there is still a need for flights to maintain a controlled delivery.

It is an object of the present invention to provide an improved produce delivery conveyor and luffing head therefor to reduce the damage otherwise done to vegetables and the like leaving the conveyor and dropping into the container which is being loaded.

0112091

- 2 -

## Summary of the invention

According to one aspect of the present invention a method of controlling the delivery of produce from the luffing head of a produce delivery conveyor comprises the steps of:-

-1   adjusting the declination of the luffing head

-2   sensing when the angle of declination of the delivery conveyor is more than a predetermined angle (at which produce will roll down the conveyor), and

-3   moving into an operating position above the luffing head a subsidiary conveyor which moves in synchronism with the delivery conveyor and carries hinged flights, the run of the subsidiary conveyor being such that the flights hang down therefrom and co-operate with the upper surface of the main conveyor to prevent roll-off of the produce and control the delivery of the produce therefrom.

According to another aspect of the invention apparatus for performing the above method comprises:-

1)   a main conveyor the angle of which is sufficiently shallow as not to require flights to prevent roll-back of produce therealong,

2)   a luffing head at the delivery end of the main conveyor the angle of which can be adjusted to angles of declination at which roll-off of the produce will occur,

3)   a subsidiary conveyor carrying hinged flights mounted above the luffing head and movable into a lower operating position in which the flights co-operate with the main conveyor to prevent roll-off of the produce when the luffing head is inclined downwardly,

4) drive means for driving the subsidiary conveyor at the same linear speed on the main conveyor, and

5) means for raising the subsidiary conveyor or lifting the flights thereof clear of the luffing head, when not required.

Preferably the flights are raised clear of the luffing head by raising the subsidiary conveyor well clear of the main conveyor.

Conveniently hydraulic rams are provided for altering the inclination of the luffing head and main conveyor and for raising and lowering the subsidiary conveyor.

Preferably the drive for the subsidiary conveyor is obtained from the main conveyor drive.

In another arrangement, the subsidiary conveyor is fixed in position above the luffing head and means is provided which lifts the flights (which normally hang down) into line with the underside of the subsidiary conveyor so as to be well clear of the luffing head when not required.

Since the main delivery conveyor does not include flights, the luffing head can be lowered into contact with the floor of the container/vehicle which is to be loaded or into contact (or effective contact) with already unloaded produce so that there is little or no drop for the produce at the delivery end of the luffing head.

Likewise, the absence of flights around the main conveyor allows the loading end thereof to be located at floor level.

At the delivery end of the luffing head, the flights on the subsidiary conveyor are led away upwardly and away from the main conveyor so that produce can exit without damage from the luffing head.

The flights which extend from the subsidiary conveyor are typically lengths of resiliently deformable material such as rubber or plastics hose or the like.

The invention will now be described by way of example with reference to the accompanying drawings in which:-

Figure 1 is a side elevation of the upper end of a produce delivery conveyor with luffing head in which the latter is substantially horizontal, and the subsidiary conveyor is raised.

Figure 2 is a similar elevation with the luffing head angled downwardly to allow for the delivery of produce therefrom, and

Figure 3 is a similar elevation showing the luffing head angled downwardly to its maximum extent.

Detailed description of the drawings

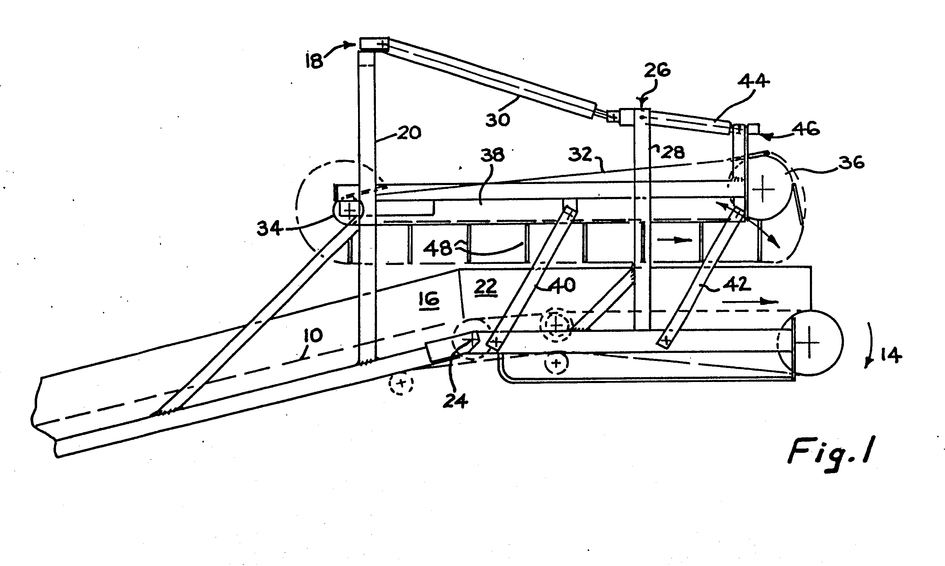

In Fig 1 a delivery conveyor 10 terminates in a luffing head 12 from which produce is delivered to a container or vehicle (not shown) in the direction of arrow 14. The main conveyor includes side walls 16 to which are attached uprights of a main support frame 18, one of the uprights being denoted by reference numeral 20.

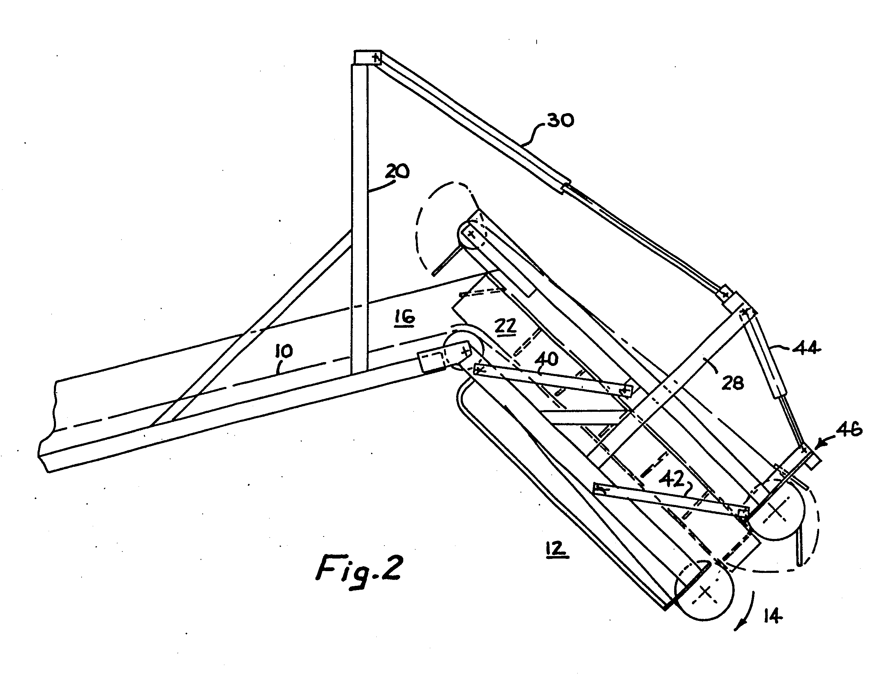

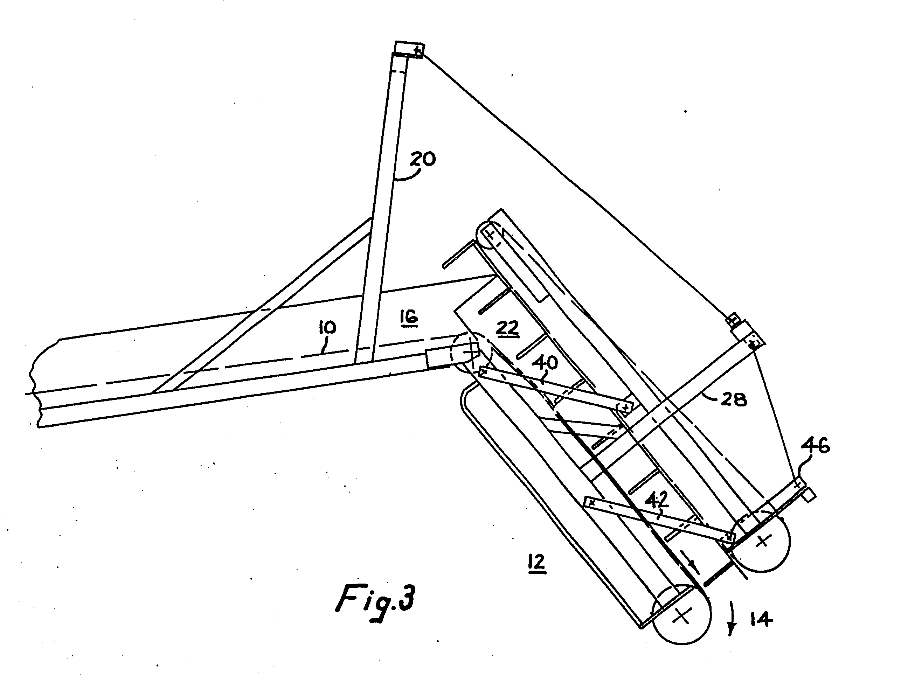

The luffing head includes side walls 22 which co-operate with the side walls 16 and are slideable relative thereto (as can be seen in Figs 2 and 3) to permit pivoting of the luffing head about the axis 24.

A subsidiary frame 26 is attached to the side walls 22 of the luffing head and one of the uprights of this frame 26 is denoted by reference numeral 28.

Between the two frames 18 and 26 stretches a double acting ram 30 by which the luffing head can be pivoted relative to the rest of the conveyor 10.

A subsidiary conveyor 32 extends above the luffing head conveyor section between two conveyor rollers 34 and 36 carried at opposite ends of a floating frame 38. The latter is attached to the luffing head walls 22 by a four point parallel linkage 40, 42 and is movable forwardly and backwardly (and up and down) relative to the luffing head by a second hydraulic ram 44. This ram 44 is attached at one end to the frame 26 and at its other end to a front frame 46 which extends over and forms a bridge at the delivery end of the subsidiary conveyor 32 and is attached to the frame 38.

Advancement of the ram 44 moves the subsidiary conveyor 32 forward and downward whilst retraction moves the conveyor 32 rearward and upward.

The conveyor belt has flights pivotally attached thereto at equally spaced positions therearound. Two such flights are denoted by reference numeral 48. As they move around the conveyor path so they hang down (as shown in Fig 1) so as to co-operate with the luffing head conveyor 10 (when the subsidiary conveyor has been moved towards the luffing head as shown in Fig 2) so as to prevent the produce (not shown) on the luffing head conveyor from accelerating off. In this way the delivery of the produce from the luffing head, even when the latter is inclined at a relatively steep angle such as shown in Figs 2 and 3, is at all times controlled.

The flights 48 are formed from lengths of rubber hose.

As the sections of the conveyor belt 32 to which the flights are attached move around the exit roller 36, so the flights 48 effectively move to become tangential to the belt and along the upper return path of the conveyor, the flights 48 lie flat against the top surface of the conveyor 32.

The subsidiary conveyor and interaction of the flights with the main conveyor may not be necessary all of the time, and when not required the flights may be moved out of engagement with the conveyor 32 either as just described by raising the subsidiary conveyor relative to the luffing head conveyor or by simply introducing a guide rail (not shown) below the subsidiary conveyor so that as the conveyor and flights move around the roller 34 the flights are caused to occupy a generally below it as shown. The use of such a guide (which when removed will of course allow the flights to hang down from the conveyor once again as shown) obviates the need for the raising and lowering of the conveyor 32, which latter can be left in place in the position (relative to the luffing head) as shown in Figs 2 and 3.

(7)

Fig 2 shows extension of the luffing head ram 30 to cause declination of the luffing head 12. At this angle (and at steeper angles up to the maximum declination shown in Fig 3) the steadying effect of the flights 48 is needed to prevent the produce slipping and accelerating off the luffing head conveyor and to this end in both Figs 2 and 3 the subsidiary conveyor 32 is shown in its "lowered" (operational) position.

By using a light weight, flexible material fo the flights 48, so the latter will not damage any produce on the main conveyor as the flights flips around at the left hand end (as shown in the drawings) of the subsidiary conveyor 32.

A significant advantage of the invention is that the main conveyor no longer needs flights (provided its angle is sufficiently shallow to prevent roll-back) and this allows the lower end of the main conveyor to be sited closer to the ground (where for example the main conveyor forms part of or comprises the crop elevating conveyor in a root crop harvesting machine such as a potato harvester.

Patent Claims

1. A method of controlling the delivery of produce from the luffing head of a produce delivery conveyor comprising the steps of:-

-1 adjusting the declination of the luffing head

-2 sensing when the angle of declination of the delivery conveyor is more than a predetermined angle (at which produce will roll down the conveyor), and

-3 moving into an operating position above the luffing head a subsidiary conveyor which moves in synchronism with the delivery conveyor and carries hinged flights, the run of the subsidiary conveyor being such that the flights hang down therefrom and co-operate with the upper surface of the main conveyor to prevent roll-off of the produce and control the delivery of the produce therefrom.

2. Apparatus for performing the method of Claim 1 comprising:

1) a main conveyor the angle of which is sufficiently shallow as not to require flights to prevent roll-back of produce therealong,

2) a luffing head at the delivery end of the main conveyor the angle of which can be adjusted to angles of declination at which roll-off of the produce will occur,

3) a subsidiary conveyor carrying hinged flights mounted above the luffing head and movable into a lower operating position in which the flights co-operate with the main conveyor to prevent roll-off of the produce when the luffing head is inclined downwardly,

4) drive means for driving the subsidiary conveyor at the same linear speed on the main conveyor, and

5) means for raising the subsidiary conveyor or lifting the flights thereof clear of the luffing head, when not required.

3. Apparatus as claimed in Claim 2 wherein the flights are raised clear of the luffing head by raising the subsidiary conveyor well clear of the main conveyor.

4. Apparatus as claimed in Claim 2 wherein hydraulic rams are provided for altering the inclination of the luffing head and main conveyor and for raising and lowering the subsidiary conveyor.

5. Apparatus as claimed in Claim 2 wherein the drive for the subsidiary conveyor is obtained from the main conveyor drive.

6. Apparatus as claimed in Claim 2 wherein the subsidiary conveyor is fixed in position above the luffing head and means is provided which lifts the flights (which normally hang down) into line with the underside of the subsidiary conveyor so as to be well clear of the luffing head when not required.

7. Apparatus as claimed in Claim 2 wherein the flights which extend from the subsidiary conveyor are lengths of resiliently deformable material.

8. Apparatus as claimed in Claim 7 wherein the flights are formed from rubber.

9. Apparatus as claimed in Claim 7 wherein the flights are formed from plastics material.

10. Apparatus as claimed in Claim 2 constructed arranged and adapted to operate substantially as herein described with reference to and as illustrated in the accompanying drawings.

0112091

Fig. 1

Fig.2

0112091

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A- 350 165 (TOMLINSON) * Whole document * | 1,2,5 | B 65 G 69/16 A 01 D 17/10 |
| A | DE-A-2 737 782 (VEB WEIMAR KOMBINAT) Figures 1-4; page 6, line 28 - page 7, line 17 * | 1,2,4 | |
| A | US-A-4 360 308 (GIFFORD et al.) * Figures 1-5; column 6, line 21 - column 8, line 14 * | 1,2,4 | |
| A | GB-A-2 067 434 (UNDERHAUGS FABRIKK A/S) * Figure 1; page 2, lines 56-79 * | 7 | |

TECHNICAL FIELDS SEARCHED (Int. Cl. ³)

B 65 G
A 01 D

The present search report has been drawn up for all claims

| Place of search | Date of completion of the search | Examiner |
|---|---|---|
| THE HAGUE | 14-03-1984 | DISSEN H.D. |